# EUROPÄISCHE PATENTSCHRIFT

(11) **EP 2 928 818 B1**
(45) Veröffentlichungstag und Bekanntmachung des Hinweises auf die Patenterteilung: **06.06.2018**
(21) Anmeldenummer: 13788778.2
(22) Anmeldetag: 08.11.2013
(51) Int. Cl.: C01B 3/02, B01J 8/06, F28F 9/22, F28D 7/16, F28F 1/32, B01J 16/00, B01J 19/24

(54) **REAKTOR ZUR FREISETZUNG VON WASSERSTOFF**
REACTOR FOR LIBERATING HYDROGEN
RÉACTEUR POUR LE DÉGAGEMENT D'HYDROGÈNE

(30) Priorität: 07.12.2012 DE 102012222560
(43) Veröffentlichungstag der Anmeldung: 14.10.2015
(73) Patentinhaber: Bayerische Motoren Werke Aktiengesellschaft, 80809 München (DE)
(72) Erfinder: SCHWINDL, Martin, 85777 Fahrenzhausen (DE); TEICHMANN, Daniel, 80796 München (DE); ZENNER, Michael, 80993 München (DE)
(86) Internationale Anmeldenummer: PCT/EP2013/073410
(87) Internationale Veröffentlichungsnummer: WO 2014/086551

(56) Entgegenhaltungen:
- EP-A1- 0 998 973
- DE-A1-102007 039 478
- US-A- 5 181 937
- US-A1- 2011 268 631
- US-A1- 2012 282 163

## Beschreibung

Die Erfindung betrifft einen Reaktor zur Freisetzung von Wasserstoff aus flüssigen Verbindungen nach dem Oberbegriff des ersten Anspruchs und ein Verfahren zur Kraftstoffversorgung eines Verbrauschers mittels des Reaktors.

Heute diskutierte Szenarien zur Energiebereitstellung aus regenerativen Quellen im großen Maßstab, zum Beispiel Windparks in der Nordsee oder Desertec erfordern als wesentliche technische Voraussetzung geeignete Wege, um große Energiemengen möglichst verlustfrei speichern und transportieren zu können. Nur so lassen sich saisonale Schwankungen in der Erzeugung ausgleichen, nur so kann ein effizienter Transport der Nutzenergie über große Distanzen realisiert werden.

Ein bevorzugter Ansatz zur technischen Realisierung eines Energietransport- und Energiespeichersystems ist die Beladung eines energiearmen Stoffes A mit Wasserstoff unter Bildung eines energiereichen Stoffes B, wobei der dabei benötigte Wasserstoff aus einer Elektrolyse von Wasser mit Hilfe von bevorzugt regenerativ erzeugter elektrischer Energie bereit gestellt wird. Dieser energetische Beladungsvorgang erfolgt nach dem Stand der Technik typischerweise durch eine katalytische Hydrierreaktion unter Druck. Die energetische Entladung des Stoffes B erfolgt durch katalytische Dehydierung bei niedrigen Drücken und hohen Temperaturen. Der dabei wieder freigesetzte Wasserstoff kann zum Beispiel in einer Brennstoffzelle oder in einem Verbrennungsmotor energetisch genutzt werden. Erfolgt die Wasserstoffreisetzung an Bord eines Fahrzeugs, kann der dabei bereit gestellte Wasserstoff direkt zum Betrieb des Fahrzeugs genutzt werden. Dem Stand der Technik bekannte Beispiele umfassen die Energiespeicherung in Form von CH₄, NH₃ oder Methanol. Bei der Wasserstoffentladung dieser Verbindungen entstehen die gasförmigen Stoffe CO₂ - im Falle von Methan und Methanol - bzw. Stickstoff - im Falle von NH₃.

Ein alternatives, bekanntes Konzept, bei dem die energiearme Form A eine Flüssigkeit darstellt und folglich bei der energetischen Entladung erneut eine Flüssigkeit erhalten wird, beschreibt die DE 10 2008 034 221 A1. Die energiearme Form A kann in diesem Fall als Flüssigkeit gelagert und transportiert werden, um zu einer energiereichen Zeit und an einem energiereichen Ort erneut mit Wasserstoff beladen zu werden. Solche Systeme werden als "Liquid Organic Hydrogen Carriers (LOHCs)" bezeichnet. Beispiele solcher LOHCs werden in der Patentanmeldung EP 1 475 349 A2 offenbart. Bevorzugt handelt es sich bei den dem Stand der Technik bekannten LOHC-Systemen um Stoffpaare, bei denen der energiearme Stoff A eine hochsiedende, funktionalisierte, aromatische Verbindung darstellt, die im energetischen Beladungsvorgang hydriert wird. Reaktionssysteme zur katalytischen Wasserstofffreisetzung aus flüssigen Energiespeichermolekülen bestehen nach dem Stand der Technik aus Festbettreaktoren oder Slurry-Phasenreaktoren. In beiden genannten Reaktionssystemen bereitet das effiziente Einbringen von Wärme in den Reaktor Schwierigkeiten, da die Wärme über relativ große Distanzen von schlecht Wärme-leitenden Medien an den Reaktionsort transportiert werden muss. Außerdem werden die beiden genannten Reaktionssysteme durch die große, bei der dehydrierenden Entladung gebildete Wasserstoff-Gasmenge in ihrer Effizienz stark beeinträchtigt. In den, dem Stand der Technik bekannten Festbett- oder Slurry-Phasen-Reaktoren werden bei dieser Reaktion die katalytisch aktiven Oberflächen "freigeblasen", das heißt der Kontakt der zu entladenden Flüssigkeit mit der katalytischen Oberfläche wird durch bereits gebildetes Gas stark behindert. Dadurch ist die Geschwindigkeit der Wasserstofffreisetzung stark verlangsamt, was eine größere Freisetzungsapparatur für eine vorgegebene Leistung erfordert.

Die US 2012/0282163 A1 beschreibt als nächstliegender Stand der Technik einen Wärmetausch-Reaktor, mit dem in einer Abwärtsströmung aus einem flüssigen Biomasse-Ausgangsmaterial durch Umwandeln aus wässeriger Phase Wasserstoff oder leichte Kohlenwasserstoffe gewonnen werden können, was als Brennstoff für zum Beispiel Brennstoffzellen benutzt werden kann.

Aufgabe der vorliegenden Erfindung ist es, einen Reaktor zur Freisetzung von Wasserstoff bereitzustellen, durch den die vorstehenden Nachteile des Standes der Technik überwunden werden. Außerdem ein Verfahren zur Versorgung eines Verbrauchers mit Wasserstoff durch den Betrieb des Reaktors.

Die Aufgabe der Erfindung wird durch die Merkmale des ersten Anspruchs gelöst. Ein vorteilhaftes Verfahren zur Versorgung eines Verbrauchers mit Wasserstoff ist Inhalt des abhängigen Anspruchs.

Nach der Erfindung ist ein Reaktor zur Freisetzung von Wasserstoff aus einer Wasserstoff tragenden, flüssigen Verbindung, mit einem Reaktorgefäß, das Körper mit metallischer Trägerstruktur enthält, auf die eine feste, hochporöse Beschichtung aufgebracht ist, die katalytisch wirkende Substanzen für die Freisetzung von Wasserstoff aus der flüssigen, Wasserstoff tragenden Verbindung enthält, wobei das Reaktorgefäß ein Rohrbündel aus parallel geschalteten Rohren ist, dessen einzelne, auf Abstand voneinander gehaltene Rohre jeweils wenigstens einen Körper enthalten, der von der Wasserstoff tragenden Verbindung im jeweiligen Rohr umströmt wird, wobei ein Wärmetauschvorgang zwischen dem Rohrbündel und dessen Umgebung, dieses auf Reaktionstemperatur bringt, indem dessen äußere Oberfläche durch ein Heizmedium, in einem für das Heizmedium dichten Gehäuse, mit mindestens einer Zu-, einer Ablauföffnung und einem Zulaufsammelraum für das Heizmedium, mittels einer Leiteinrichtung für das Heizmedium außerhalb des Rohrbündels so beaufschlagt wird, dass das Heizmedium im Gehäuse, im Bereich des Rohrbündels, in seiner Strömungsrichtung so umgelenkt wird, dass die Rohre des Rohrbündels vom Strom des Heizmediums, jeweils auf einem Teil ihrer Länge, mit jeweils unterschiedlicher Strömungsrichtung beaufschlagt werden, dadurch gekennzeichnet, dass die Rohre des Rohrbündels vertikal verlaufen und durch für ein Heizgas als Heizmedium undurchlässige Wärmeübertragungslamellen verbunden sind, durch diese hindurchstoßen und die Leiteinrichtung bestimmte Wärmeübertragungslamellen, das Heizmedium stromrichtungsumkehrehd, außerhalb des Rohrbündels verbindet.

Die Wasserstofffreisetzungseinheit kann aufgrund des Rohrbündels so vorteilhafterweise weitere Funktionen übernehmen, zum Beispiel bei der Phasentrennung und der Wärmezufuhr. So kann die gesamte Vorrichtung mit mehreren integrierten Funktionen in einem Bauteil realisiert werden. Vorteilhaft für den Betrieb des Reaktors ist es, insbesondere für die Abführung des Wasserstoffs vom Katalysatorkörper, dass die Rohre des Rohrbündels vertikal verlaufen. Der Wasserstoff kann so aufgrund des Auftriebs zügig nach oben entweichen, was die Wärmeübertragung im Rohrbündel und damit den Prozess der Wasserstofffreisetzung beschleunigt und über das Heizmedium besser steuerbar macht. Wenn die Wärmeübertragungslamellen für das Heizmedium undurchlässig sind, kann das Heizmedium über die dann, insbesondere horizontal verlaufenden, Wärmeübertragungslamellen besonders effektiv Wärmeenergie auf die Rohre des Rohrbündels übertragen. Dabei stabilisieren die Wärmeübertragungslamellen das Rohrbündel mechanisch, was bei hohen Temperaturen letztlich Gewichtseinsparungen beim Reaktor ermöglicht, die wiederum eine effektive Wärmeübertragung auf die Wasserstoff tragende Verbindung bedeuten.

Es wird auch die Menge des notwendigen Heizmediums wesentlich verringert, bei verbessertem Wärmeaustausch, da das Heizmedium das Rohrbündel mehrmals durchströmt und so länger im Reaktor wärmeabgebend verbleibt. Rohrhälften, die mehrere Wärmeübertragungslamellen überbrückend, mit ihren beiden Schnittkanten in Axialrichtung an jeweils einer Längskante einer Wärmeübertragungslamelle angebracht sind, sind konstruktiv besonders vorteilhaft. Werden zwei Rohrhälften, jeweils eine auf gegenüberliegenden Seiten des Rohrbündes in vertikaler Richtung, insbesondere um ihren Radius, versetzt an den Wärmeübertragungslamellen angebracht, wird die Strömung des Heizmediums zweimal in ihrer Richtung verändert, dieses wird dreimal zum Wärmetausch durch das Rohrbündel geleitet und das Heizmedium kann in den Reaktor auf einer Seite einströmen und diesen auf der gegenüberliegenden Seite verlassen, was einen konstruktiv einfachen Aufbau des und wenig Strömungsverluste im Reaktor mit sich bringt. Mit einem so aufgebauten Reaktor kann vorteilhafterweise mit einem guten Wirkungsgrad aus der Wasserstoff tragenden Verbindung, mittels katalytischer Dehydrierung bei hoher Temperatur und niedrigem Druck, Wasserstoff freigesetzt werden, der in den Rohren nach oben steigend abgeführt wird.

Ein vorteilhaftes Verfahren zur mindestens anteiligen Versorgung eines in einem Brennraum Kraftstoff verbrennenden Verbrauchers mit Wasserstoff, insbesondere einer Brennkraftmaschine oder Brennstoffzellen eines Kraftfahrzeugs, mittels des Reaktors kann dann dadurch gekennzeichnet sein, dass der Reaktor aus einem ersten Speichertank für eine Wasserstoff tragende Verbindung über eine Zulaufleitung mit dieser versorgt wird und die bei hoher Temperatur und niedrigem Druck dehydrierte Verbindung dann über eine Ablaufleitung von dem Reaktor in einen zweiten Speichertank abgeleitet wird, wobei der Reaktor einen Brennraum des Verbrauchers über eine Verbindungsleitung mit Wasserstoff versorgt.

Das hier zur Anwendung kommende Konzept der "Energietragenden Stoffe" besitzt den Vorteil, dass es unserer bisherigen Energieversorgung durch fossile Energieträger, insbesondere Rohöl, technisch nahe steht und daher die vorhandene Infrastruktur, wie Schiffe, Raffinerien, Tankstellen, genutzt werden kann. Insbesondere können über "Energietragende Stoffe" Energieüberschüsse aus regenerativer Produktion gespeichert und mit dem Energiebedarf für Mobilität, Beheizung und Transport in der heutigen Infrastruktur verknüpft werden. Chemische Energiespeicher haben noch folgende Vorteile: Eine nahezu unbegrenzte, verlustfreie Speicherfähigkeit, eine hohe Energiedichte und geringe Kosten. Solche energietragenden Stoffe sind geeignet als Langzeitspeicher und Transportform von Energie.

Ein bevorzugtes Ausführungsbeispiel der Erfindung ist in der nachfolgenden Beschreibung und der zugehörigen Zeichnung näher dargestellt. Es zeigen:

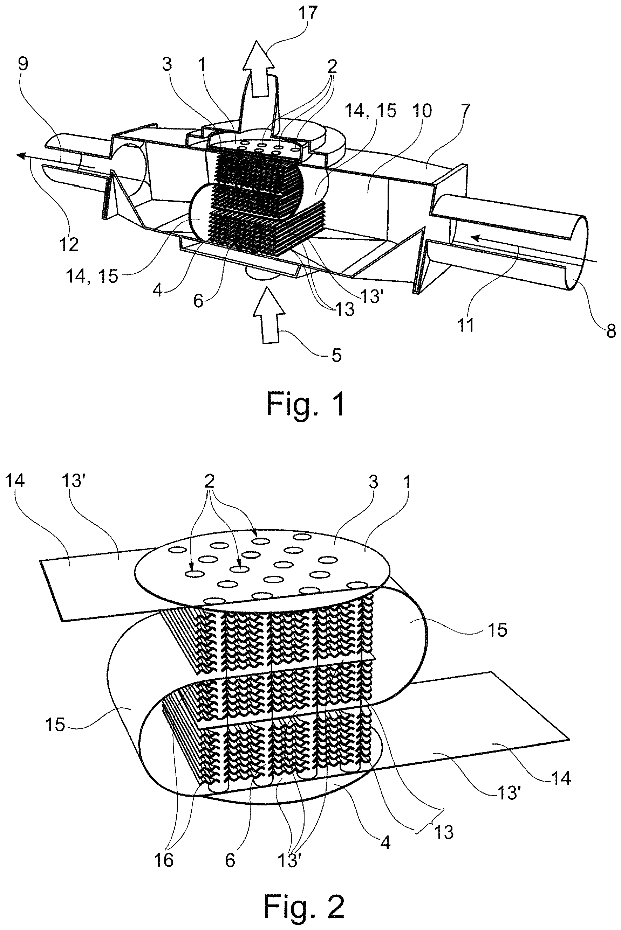

- Figur 1:: eine räumliche, in Längsrichtung aufgeschnittene Darstellung eines erfindungsgemäßen Reaktors und
- Figur 2:: eine vergrößerte Darstellung eines Rohrbündels des Reaktors aus Figur 1 mit Wärmeübertragungslamellen und Leiteinrichtung.

Firgur 1 zeigt einen Reaktor zur Freisetzung von Wasserstoff aus einer Wasserstoff tragenden, flüssigen Verbindung, mit einem Reaktorgefäß 1, das als katalytische Reaktionssysteme nicht gezeichnete Körper mit metallischer Trägerstruktur enthält, auf die eine feste, hochporöse Beschichtung aufgebracht ist, die katalytisch wirkende Substanzen für die Freisetzung von Wasserstoff aus der flüssigen, Wasserstoff tragenden Verbindung enthält. Das Reaktorgefäß 1 ist ein Rohrbündel 6 aus parallel geschalteten Rohren 2, dessen einzelne, durch zwei Befestigungsplatten 3, 4 auf Abstand voneinander gehaltene Rohre 2 jeweils wenigstens einen Körper mit metallischer Trägerstruktur enthalten, der von der Wasserstoff tragenden, flüssigen Verbindung, symbolisch durch einen Strömungsrichtungspfeil 5 dargestellt, im jeweiligen Rohr 2 umströmt wird, wobei ein Wärmetauschvorgang zwischen dem Rohrbündel 6 und dessen Umgebung, die Wasserstoff tragende Verbindung 5 und den Körper mit metallischer Trägerstruktur in den Rohren 2 auf Reaktionstemperatur bringt, indem die äußere Oberfläche des Rohrbündels 6 durch ein Heizmedium, in einem für das Heizmedium dichten Gehäuse 7, mit mindestens einer Zu- 8, einer Ablauföffnung 9 und einem Zulaufsammelraum 10 für das Heizmedium, beaufschlagt wird. Das Heizmedium ist hier Heizgas und symbolisch dargestellt durch einen Strömungsrichtungspfeil 11 am Heißgaseintritt, der Zulauföffnung 8 und einen Strömungsrichtungspfeil 12 am Heißgasaustritt, der Ablauföffnung 9. Der Reaktor ist in Betriebsposition gezeichnet, in der die Rohre 2 des Rohrbündels 6 vertikal verlaufen. Der Wasserstoff kann so aufgrund des Auftriebs zügig mit der dehydrierten flüssigen Verbindung nach oben entweichen, symbolisch durch einen Strömungsrichtungspfeil 17 dargestellt, was die Wärmeübertragung im Rohrbündel 6 und damit den Prozess der Wasserstofffreisetzung beschleunigt und über das Heizmedium besser steuerbar macht.

Die Rohre 2 des Rohrbündels 6 sind durch Wärmeübertragungslamellen 13 verbunden. Diese sind für das Heizmedium undurchlässig und werden durch die Rohre 2 des Rohrbündels 6 durchstoßen. Dadurch kann das Heizmedium über die insbesondere horizontal verlaufenden, Wärmeübertragungslamellen 13 besonders effektiv Wärmeenergie auf die Rohre 2 des Rohrbündels 6 übertragen. Außerdem stabilisieren die Wärmeübertragungslamellen 13 das Rohrbündel 6 mechanisch, was bei hohen Temperaturen letztlich Gewichtseinsparungen beim Reaktor ermöglicht, die wiederum eine effektive Wärmeübertragung auf die Wasserstoff tragende Verbindung bedeuten.

Außerdem ist eine Leiteinrichtung 14 für das Heizmedium vorgesehen, die dieses im Gehäuse 7 im Bereich des Rohbündels 6 in seiner Strömungsrichtung so umlenkt, dass die Rohre 2 des Rohrbündels 6 vom Strom des Heizmediums 11 jeweils auf einem Teil ihrer Länge mit jeweils unterschiedlicher Strömungsrichtung beaufschlagt werden. So wird die Menge des notwendigen Heizmediums wesentlich verringert, bei verbessertem Wärmeaustausch, da das Heizmedium das Rohrbündel 6 mehrmals durchströmt und so länger im Reaktor wärmeabgebend verbleibt.

Die Leiteinrichtung 14 verbindet bestimmte Wärmeübertragungslamellen 13' außerhalb des Rohrbündels 6 stromrichtungsumkehrend durch Rohrhälften 15, die mehrere Wärmeübertragungslamellen überbrückend, mit ihren beiden Schnittkanten 16 in Axialrichtung an jeweils einer Längskante einer Wärmeübertragungslamelle 13' angebracht sind. Hier werden zwei Rohrhälften 15, jeweils eine auf gegenüberliegenden Seiten des Rohrbündes 6 in vertikaler Richtung um ihren Radius versetzt an den Wärmeübertragungslamellen 13' angebracht. Dadurch wird die Strömung 11 des Heizgases zweimal in ihrer Richtung verändert, dieses wird dreimal zum Wärmetausch durch das Rohrbündel 6 geleitet und das Heizgas verlässt dann den Reaktor auf der der Einströmseite (Pfeil 11) gegenüberliegenden Seite (Pfeil 12) .

## Patentansprüche

1. Reaktor zur Freisetzung von Wasserstoff aus einer Wasserstoff tragenden, flüssigen Verbindung, mit einem Reaktorgefäß (1), das Körper mit metallischer Trägerstruktur enthält, auf die eine feste, hochporöse Beschichtung aufgebracht ist, die katalytisch wirkende Substanzen für die Freisetzung von Wasserstoff aus der flüssigen, Wasserstoff tragenden Verbindung (5) enthält, wobei das Reaktorgefäß (1) ein Rohrbündel (6) aus parallel geschalteten Rohren (2) ist, dessen einzelne, auf Abstand voneinander gehaltene Rohre (2) jeweils wenigstens einen Körper enthalten, der von der Wasserstoff tragenden Verbindung (5) im jeweiligen Rohr (2) umströmbar und mittels eines Wärmetauschvorgangs zwischen dem Rohrbündel (6) und dessen Umgebung auf eine Reaktionstemperatur bringbar ist, indem eine äußere Oberfläche des Rohrbündels (6) durch ein Heizmedium (11, 12), in einem für das Heizmedium (11, 12) dichten Gehäuse (7), mit mindestens einer Zu- (8), einer Ablauföffnung (9) und einem Zulaufsammelraum (10) für das Heizmedium (11, 12), mittels einer Leiteinrichtung (14) für das Heizmedium (11, 12) außerhalb des Rohrbündels (6) beaufschlagbar ist und das Heizmedium (11, 12) im Gehäuse (7), im Bereich des Rohrbündels (6), in seiner Strömungsrichtung so umlenkbar ist, dass der Strom des Heizmediums (11, 12) die Rohre (2) des Rohrbündels (6), jeweils auf einem Teil ihrer Länge mit jeweils unterschiedlicher Strömungsrichtung beaufschlagt, **dadurch gekennzeichnet, dass** die Rohre (2) des Rohrbündels (6) vertikal verlaufen und durch für ein Heizgas als Heizmedium undurchlässige Wärmeübertragungslamellen (13, 13') verbunden sind, durch diese hindurchstoßen und die Leiteinrichtung (14) bestimmte Wärmeübertragungslamellen (13') außerhalb des Rohrbündels (6) stromrichtungsumkehrend verbindet.

2. Verfahren zur mindestens anteiligen Versorgung eines in einem Brennraum Kraftstoff verbrennenden Verbrauchers mit Wasserstoff, mittels eines Reaktors nach Anspruch 1, **dadurch gekennzeichnet, dass** der Reaktor aus einem ersten Speichertank für eine Wasserstoff tragende Verbindung über eine Zulaufleitung mit dieser versorgt wird und die bei hoher Temperatur und niedrigem Druck dehydrierte Verbindung über eine Ablaufleitung von dem Reaktor in einen zweiten Speichertank abgeleitet wird, wobei der Reaktor einen Brennraum des Verbrauchers über eine Verbindungsleitung mit Wasserstoff versorgt.

## Claims

1. A reactor for liberating hydrogen from a hydrogen-carrying, liquid compound, comprising a reactor vessel (1), which contains bodies having a metallic carrier structure, to which a solid, highly porous coating is applied, which contains catalytically acting substances for the liberation of hydrogen from the liquid, hydrogen-carrying compound (5), wherein the reactor vessel (1) is a tube bundle (6), which is formed of tubes (2) connected in parallel and of which the individual tubes (2) held at a distance from one another each contain at least one body, around which the hydrogen-carrying compound (5) can flow in the relevant tube (2) and which can be brought to a reaction temperature by means of a heat exchange process between the tube bundle (6) and the surrounding environment thereof, in that an outer surface of the tube bundle (6) can be exposed to a heating medium (11, 12), in a housing (7) that is tight to the heating medium (11, 12) and that has at least one feed opening (8), a discharge opening (9), and a feed collection chamber (10) for the heating medium (11, 12), by means of a conducting device (14) for the heating medium (11, 12) outside the tube bundle (6), and the flow direction of the heating medium (11, 12) can be deflected in the housing (7), in the region of the tube bundle (6), such that the flow of the heating medium (11, 12) acts on each of the tubes (2) of the tube bundle (6) over part of the length thereof with a different flow direction, **characterised in that** the tubes (2) of the tube bundle (6) run vertically and are connected by heat transfer lamellas (13, 13') that are impermeable for a heating gas as heating medium, and penetrate through these lamellas, and the conducting device (14) connects certain heat transfer lamellas (13') outside the tube bundle (6) in a manner reversing the flow direction.

2. A method for supplying hydrogen to at least portions of a consumer, which combusts fuel in a combustion chamber, by means of a reactor according to claim 1, **characterised in that** the reactor is supplied with a hydrogen-carrying compound from a first storage tank for said compound via a feed line, and the compound, which is dehydrated at high temperature and low pressure, is discharged from the reactor into a second storage tank via a discharge line, wherein the reactor supplies hydrogen to a combustion chamber of the consumer via a connecting line.

## Revendications

1. Réacteur permettant de libérer de l'hydrogène à partir d'un composé liquide renfermant de l'hydrogène, comprenant une cuve réactionnelle (1) qui renferme des corps ayant une structure de support métallique sur lesquels est appliqué un revêtement solide de grande porosité, qui renferme des substances catalytiquement actives permettant la libération de l'hydrogène à partir du composé (5) renfermant de l'hydrogène liquide, la cuve réactionnelle (1) étant un faisceau de tubes (6) constitué de tubes (2) branchés parallèlement, les tubes (2) maintenus à distance les uns des autres renfermant chacun au moins un corps pouvant être mouillé par le composé (5) renfermant de l'hydrogène et pouvant chacun être porté à une température réactionnelle par un processus d'échange de chaleur entre le faisceau de tubes (6) et son environnement, du fait que la surface externe du faisceau de tubes (6) peut être alimentée, en un fluide de chauffage (11, 12), dans un boîtier (7) étanche à ce fluide de chauffage (11, 12) ayant au moins une ouverture d'entrée (8), une ouverture de sortie (9) et une chambre de collecte (10) du fluide de chauffage (11, 12), au moyen d'un dispositif de transfert (14) du fluide de chauffage (11, 12) à l'extérieur du faisceau de tubes (6), et, la direction de circulation du fluide de chauffage (11, 12) dans le boîtier (7) dans la zone du faisceau de tubes (6) pouvant être modifiée de sorte que le flux de fluide de chauffage (11, 12) alimente les tubes (2) du faisceau de tubes (6) respectivement sur une partie de leur longueur avec respectivement des directions de circulation différentes,
**caractérisé en ce que**
les tubes (2) du faisceau de tubes (6) s'étendent verticalement, et sont reliés, par des lamelles de transfert de chaleur (13, 13') imperméables à un gaz de chauffage constituant le fluide de chauffage, en passant au travers de celles-ci et le dispositif de transfert (14) relie des lamelles de transfert de chaleur (13') à l'extérieur du faisceau de tube (6) en inversant le sens de circulation.

2. Procédé d'alimentation au moins partielle en hydrogène d'un consommateur brûlant du carburant dans une chambre de combustion, au moyen d'un réacteur conforme à la revendication 1,
**caractérisé en ce que**
le réacteur est alimenté en hydrogène, à partir d'un premier réservoir de stockage d'un composé renfermant de l'hydrogène, par l'intermédiaire d'une conduite d'entrée, et, le composé déshydrogéné à haute température et sous faible pression est transféré, par l'intermédiaire d'une conduite de sortie, du réacteur dans un second réservoir de stockage, le réacteur alimentant en hydrogène la chambre de combustion du consommateur par l'intermédiaire d'une conduite de liaison.
